# EUROPEAN PATENT SPECIFICATION

(11) **EP 2 117 823 B1**
(45) Date of publication and mention of the grant of the patent: **07.05.2014**
(21) Application number: 08731556.0
(22) Date of filing: 06.03.2008
(51) Int. Cl.: B32B 3/02, B32B 33/00, B32B 27/36, D06N 7/00, D05C 17/02

(54) **Tufted PET carpet**
Getufteter PET Teppich
Tapis en PET touffeté

(30) Priority: 06.03.2007 US 893140 P
(43) Date of publication of application: 18.11.2009
(73) Proprietor: Futuris Automotive Interiors Us, Inc., Troy, MI 48084 (US)
(72) Inventor: JURIGA, Duane, M., Bloomfield Hills, MI 48302 (US)
(74) Representative: Gulde & Partner
(86) International application number: PCT/US2008/056067
(87) International publication number: WO 2008/109758

(56) References cited:
- EP-A2- 0 534 603
- WO-A1-01/73189
- WO-A1-2004/071758
- GB-A- 1 420 321
- US-A- 3 551 263
- US-A- 5 082 705
- US-A- 5 906 877
- US-A- 6 007 898
- US-A1- 2007 031 634
- US-A1- 2007 031 634
- DATABASE WPI Week 199403 Thomson Scientific, London, GB; AN 1994-023377 XP002676617, & JP 5 331757 A (TORAY IND INC) 14 December 1993 (1993-12-14)
- DATABASE WPI Week 199023 Thomson Scientific, London, GB; AN 1990-174063 XP002676618, & JP 2 112437 A (KANEGAFUCHI CHEM KK) 25 April 1990 (1990-04-25)
- DATABASE WPI Week 200003 Thomson Scientific, London, GB; AN 2000-033619 XP002676619, & JP 11 302443 A (KK IS) 2 November 1999 (1999-11-02)
- DATABASE WPI Week 200020 Thomson Scientific, London, GB; AN 2000-233048 XP002676620, & JP 2000 053802 A (KK IS) 22 February 2000 (2000-02-22)

## Description

### BACKGROUND OF THE INVENTION

The present invention relates generally to vehicles and, more particularly, methods of producing carpeting utilized within vehicles.

In the automotive industry, carpeting is used for multiple purposes. One such purpose is noise attenuation since it is desirable to reduce the noise within a vehicle compartment. Various acoustical materials are used to reduce that noise which may be outside noises such as road noise, engine noise, vibrations, etc. These materials are used in dashboards, wheel wells, trunk compartments, under hoods, headliners, and especially carpeting floor panels. The acoustic properties of the carpeting floor panels are not the only considerations or functionality taken into account with respect to the carpeting panels. Such other considerations include the weight of the carpeting, the look of the carpeting, the cost of the carpeting and the feel (or the "hand") of the carpeting. There are two main types of carpeting constructions used to attain these desired features.

Carpeting used in the automotive industry is typically tufted or nonwoven needle punch constructions. Tufted carpeting generally includes a composite structure in which tufts, or bundles of carpet fibers are introduced (such as by stitching) into a primary backing, such as a woven or non-woven fabric. These carpet fibers are typically a yarn consisting of nylon, polyester, wool or polypropylene, with nylon being the most common. A secondary backing or coating of thermoplastic material is then applied to the underside of the carpet construction in order to securely retain the tufted material in the primary backing. This secondary backing not only dimensionally stabilizes the construction but may also provide greater abrasion and wear resistance, and may serve as an adhesive for an additional layer of material. Nonwoven carpet is composed of fiber that is mechanically entangled by needling, water jet; or other processes. Tufted nylon carpet has superior wear characteristics and as a result is generally preferred in North American automotive applications versus the less superior wear of the non-woven needle punch constructions which is generally preferred in European and Asian production markets.

Nylon has drawbacks however and there is always a desire to improve automotive carpet technology without increasing the cost of the carpet. This desire has lead to alternative fibers being used in such carpet applications. One such alternative is polyethylene terephthalate (PET). PET fiber is made from PET chips, some of which come from recycled plastic containers. While PET is technically a polyester, it has a much higher melting point than polyester, which has been a drawback to the use of other polyesters. The melting point of PET is comparable to that of nylon. PET also has the potential to be recycled over and over. PET fiber also has a natural stain resistance quality which avoids the problem of nylon needing an application of a stain resistance chemical due to being inherently highly susceptible to staining. Additionally, PET stronger tear strength than nylon which is advantageous as it provides better scuff and tear resistance than traditional nylon carpets. For these and other reasons, PET seems to be a logical replacement for nylon in tufted automotive carpets. Unfortunately, though, current methods of forming PET carpet with PET as the face fiber (the top layer) result in carpeting that is not as durable as nylon or polypropylene carpet and is usually recommended only for light to moderate wear conditions and therefore is a drawback and preventing its acceptance and use for automotive applications.

Therefore, there is a need in the art for a method that results in a PET carpet that combines and improves upon the many benefits and features of nylon and nonwoven needle punch constructions without increasing the cost to manufactured.

International Application WO 2004/071758 ('758) discloses an automotive tufted carpet for automotive uses. The application discloses a carpet construction having a two-layer primary backing including a first backing formed of a woven or non-woven or spunbond material. The second backing is formed of a micro-filament spunlaced material. A thermo-adhesive is positioned between the backing layers. '758 reference briefly and generally describes materials for carpets.

US Patent application 3,551,263 discloses a cut ply synthetic turf (3). The turf is formed of sliced ribbons of polymer materials that are braided and held together using a backing layer. While PET is mentioned as a potential material for the synthetic grass, tufted carpet is not discussed.

Japanese Patent application JP 5 331757 A appears to disclose a material for an automotive interior having foam backing and a pile fabric. The pile fabric appears to be described as being formed of nylon 6, 66 or PET. The reference appears to be silent as to specific material and processing parameters.

Japanese Patent application JP 2 112437 A appears to disclose a material for an automotive interior having fibers formed of PET mixed with Nylon 6, 66 and nylon: Disclosed is a fiber having a denier of 3000. The reference appears to be silent as to specific material and processing parameters or the use of PET fiber.

European Patent application 0 534 603 Appears to describe continuous polyester blended fibers for carpets. One fiber disclosed, includes 50% regenerated PET absent of color. The application is absent of the material properties processing parameters needed to produce this material or the use of PET fiber.

### SUMMARY OF THE INVENTION

In view of the above discussion, a tufted PET carpet assembly and methods of forming the same are provided. According to the present invention, a tufted PET carpet assembly comprises a face layer comprised of polyethylene terephtalate (PET) yarn comprised of PET fibers having a diameter of between 133 and 267 tex (1200 and 2400 denier), and tufted at a pre-determined gauge, the face layer having a face weight, a first backing layer adjacent the face layer, and a first back coating layer adjacent the first backing layer.

it is one object of the present invention that the tufted PET carpet have wear characteristics that are superior to non-woven needle punch constructions and competitive with traditional nylon constructions.

It is another object of the present invention that the tufted PET carpet be naturally stain resistant and have moisture resistancy that is competitive with comparable nylon fibers.

It is yet another object of the present invention that the tufted PET carpet have color retention and fade resistance characteristics superior to or competitive with existing nylon fibers.

It is another object of the present invention that the tufted PET carpet consist at least partially of recycled materials.

It is yet another object of the present invention that the tufted PET carpet have competitive or superior sound absorption characteristics compared to traditional carpets.

### DESCRIPTION OF THE DRAWINGS

The above, as well as other, advantages of the present invention will become readily apparent to those skilled in the art from the following detailed description of a preferred embodiment when considered in the light of the accompanying drawings in which:
FIG. 1 is a cross-sectional view of a preferred embodiment of a carpet in accordance with the present invention;
FIG. 2 is a cross-sectional view of an alternate embodiment of a carpet in accordance with the present invention; and

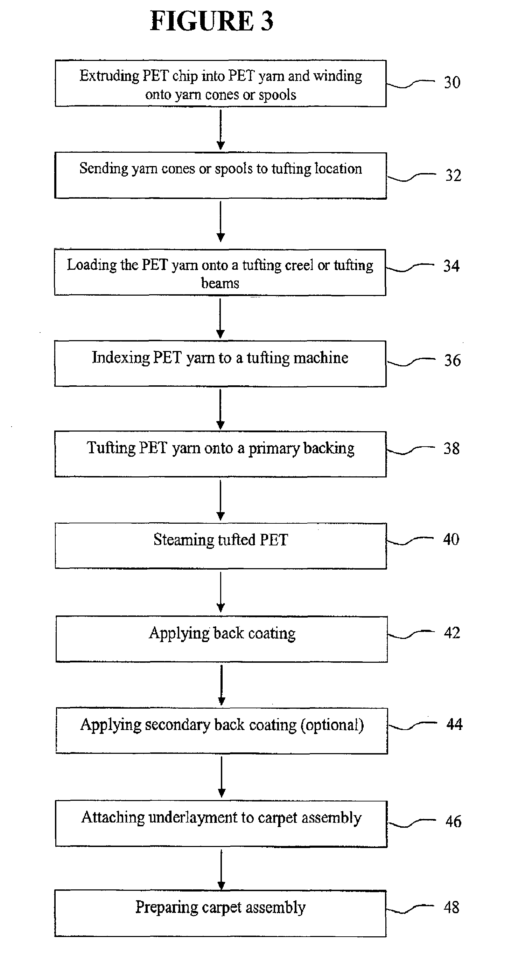

FIG. 3 is a schematic showing one exemplary method of forming tufted PET carpeting in accordance with the present invention.

### DESCRIPTION OF THE PREFERRED EMBODIMENT

The present invention relates generally to vehicles and, more particularly, tufted PET carpets and methods of producing the same for use within vehicles.

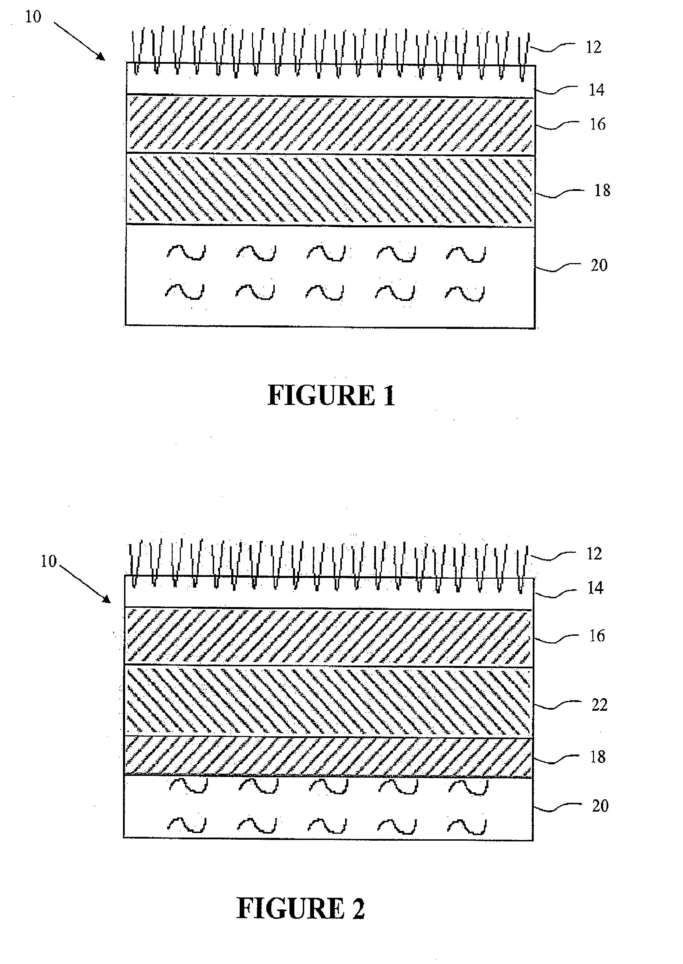

Referring to Figure 1, an embodiment of a tufted carpet is illustrated generally at 10 in accordance with the present invention. The carpet 10 has a carpet facing 12 that is backed by a primary backing 14. The carpet facing 12 which is the outward most layer that is seen and felt by the consumer is preferably formed of tufted PET while the primary backing 14 is preferably polyester, a polymer fiber such as a polyolefin (PE) or any other suitable synthetic fiber. The primary backing 14 to the carpet facing 12 is preferably formed of a polyester or spun bonded polyester blend scrim of 100-130 gsm. Adjacent to the primary backing 14 is a back coating 16 that is preferably in powder or sheet form, or any other suitable material commonly used in the art such as frothed latex or acrylic. The next layer of the carpet 10 in the preferred embodiment shown in Figure 1 is a secondary backing 18 which is preferably a lightweight scrim formed of polyester such as a PET. This secondary backing 18 is optional and may be included depending on various requirements placed on the carpeting such as moldability and sound attenuation. One skilled in the art will appreciate that the secondary backing 18 could be omitted without straying from the scope of this disclosure.

Finally, the carpet 10 preferably includes an underlayment 20. The underlayment 20 functions as an insulator pad as is commonly known in the art and is also preferably formed of PET. The cross-section for each layer 12, 14, 16, 18, and 20 is preferably uniform but may be varied. Further, the thickness of each particular layer is also preferably uniform across the entire carpet 10, however each layer may have a thickness that is different from the thickness of the other layers. Additionally, any number of additional layers may be added without straying from the scope of this disclosure. For example, referring to Figure 2, to satisfy certain requirements a secondary back coating 22 could be utilized. This secondary back coating 22 could be located between the primary backing 14 and the second backing 18 and could consist of many types of materials such as PE or an EVA blend.

PET fiber as used in this invention can be manufactured from either virgin (nonrecyled) or recycled sources. For a variety of reasons, recycled PET sources are preferred for the scope of this invention even though one skilled in the art will appreciate that virgin PET sources may also be used with similar results. Further, recycled PET fiber that is 100% post consumer recycled material is preferred over blends combining recycled and virgin sources because the 100% recycled material is composed of high quality resins if derived from plastic beverage containers due to the fact that the United States Food and Drug Administration requires top quality resins to be used in the manufacturing of such plastic containers. Due to these high quality resins which improve the strength of the fiber, PET fiber that is manufactured from recycled plastic beverage containers typically results in a better quality tufted carpet when formed in accordance with the present invention. This distinguishes recycled PET from virgin PET and makes the use of recycled PET advantageous. Testing of yarn derived from such sources has exhibited that the fibers have exceptional strength and durability, which is important for its use in the automotive carpet industry. Further, these characteristics are not lost during the recycling process.

In addition to the typical considerations for automotive carpet systems such as durability, weight, cost, sound absorption, etc., the use of recycled PET for the carpet of the present invention comes with an additional bonus feature over nylon - environmental friendliness. Utilizing the method disclosed herein, it is possible to create a "green" carpet 10 that is mainly comprised of 100% post consumer recycled material. An example of such a carpet 10 would mean that the carpet facing 12 is derived from recycled PET, the back coating 14 of PE, the second backing also of PET or a spun bound polyester scrim, and the underlayment 20 also from recycled PET. Finally, the use of recycled PET is not cost-prohibitive. Recycled PET is readily available in the material stream and in many cases provides cost advantages over both virgin resins and nylon.

While the use of the 100% recycled material is optimal and contemplated herein, this disclosure is not meant to limit the use of PET to only PET fiber that is made from 100% post consumer recycled material and anticipates that many different blends of source material may be utilized. Further, one skilled in the art will appreciate that sources of recycled material other than plastic beverage containers may also be utilized to carry out the invention.

Tufted PET for automotive carpets are manufactured utilizing fiber diameters preferably ranging from 133 to 267 tex (1200 to 2400 denier). The preferred face weight of the tufted PET can range from 305.2 gm. per 1 sq.m. to 1695.3 gm. per 1 sq.m. (9.0 oz. per 1 sq. yd. to over 50.0 oz. per 1 sq. yd). The carpet 10 can be manufactured on conventional tufting equipment as described herein, but the process preferably requires the introduction of a steaming process after the carpet has been tufted in order to develop the "hand" of the material. As described herein, the preferred method involves the introduction of a steam box or other similar heating medium to fully develop the carpet facing 12. During processing, the PET yarn can be tufted into any gauge, for example 1/8 or 1/10. The finer denier blends provide for a more luxurious hand appearance. At comparable carpet face weights, tufted PET has approximately 20% more tufts per square inch than conventional tufted nylon. This higher density results in improved elimination of corn rowing (or ridging) as often experienced in carpets of lower density. Additional fiber strength and wear performance can be achieved with the tufted PET by adding additional geometry, such as looped and twisted yarns, to the fiber. Preferably, the filament cont of the PET fiber is around 80 however that could vary without straying from the scope of the present invention. The fiber diameters of the tufted PET are typically finer than traditional nylon carpet and as a result, significant acoustical sound absorption advances are also anticipated by use of PET versus nylon. Micro-denier fiber technology may also allow the ability to tune interior vehicle acoustic performance at specific frequency ranges. For example, a micro-denier fiber layer (not shown) could be placed between the second backing 18 and the underlayment 20 to achieve different acoustic tendenties.

The tufting of specialized PET fibers, and preferably recycled PET fibers, is advantageous in the manufacturing of automotive carpet systems, including carpeted floors, inserts and auxiliary mats. One skilled in the art will appreciate that the carpeting 10. and the methods of forming tufted PET carpeting as disclosed herein are not limited to automotive applications and may also be applied for non-automotive applications such as commercial carpets, residential carpets, or airplane carpets.

The present disclosure also provides for a preferred method for forming the carpet 10. Referring now to Figure 2, in accordance with the preferred method of manufacture as disclosed herein, in the first step 30, the PET chip (either virgin or recycled) is extruded into PET yarn and then wound onto yarn cones or spools. Then in 32, if not already there, the yarn cones or spools are sent to the tufting location. The next step of the method at 34 involves loading the yarn cones onto a tufting creel or rewinding the yarn onto tufting beams. Then, in 36 the yarn is pulled off of the tufting creel or beam and indexed into a tufting machine. Next, in step 38, the yarn is tufted onto a primary backing. Then, in step 40, the carpet 10 is steamed to develop the hand of the material. This steaming step 40 preferably involves the use of a steam box or other similar heating medium. After tufting and steaming, in step 42 a back coating such as a thin latex or frothed PE layer that is preferably 40-120gms is applied to the yarn. This step 42 "tuftlocks" the PET yarn into the primary backing. Depending on the moldability and acoustic requirements for the carpet, an optional next step is applying a secondary back coating in step 44. This secondary back coating may consist of a polyethylene (PE) or ethylene vinyl acetate (EVA) blend. If a PE blend it preferably ranges from 200-800 gsm and if an EVA blend it preferably ranges from 800-2000 gsm. In step 46, an underlayment 20 is attached to the assembly. Finally, in step 48, once the carpet is completed, it can be prepared as necessary for the specific application. This step 48 may involve cutting the carpet and other necessary steps.

One skilled in the art will appreciate that the steps as listed above may vary or the order may change depending on the specific requirements of the carpet application. For example, the steaming step 46 may occur earlier in the process. In addition, steps may be added to the process. For example, depending on moldability and acoustic requirements for the carpet, a secondary backing 18 can also be added. Such a secondary backing 18 typically consists of a lightweight scrim polyester or synthetic blend and preferably ranges from 15-60 gsm.

In accordance with the provisions of the patent statutes, the present invention has been described in what is considered to represent its preferred embodiment.

## Claims

1. A lightweight carpet assembly comprising:
a face layer consisting essentially of polyethylene terephthalate (PET) yarn comprised of PET fibers, said PET yarn having a diameter of between 133 and 267 tex (1200 and 2400 denier) and being composed of PET fibers and tufted at a predetermined gauge, said face layer having a face weight;
a first backing layer adjacent said face layer; and
a first back coating layer adjacent said first backing layer.

2. The carpet assembly of claim 1 wherein said face weight of said face layer ranges from 305.2 gm. per 1 sq.m. to 1695.3 gm. per 1 sq.m (9.0 oz. per 1 sq.yd to 50.0 oz. per 1 sq.yd).

3. The carpet assembly of claim 1 wherein said face weight of said face layer is greater than 1695.3 gm. per 1 sq.m (50.0 oz. per 1 sq.yd).

4. The carpet assembly of claim 1 wherein said PET yarn of said face layer is one of looped and twisted.

5. The carpet assembly of claim 1 wherein said first backing layer is comprised of at least one of a polyester and a polymer fiber.

## Patentansprüche

1. Ein leichtgewichtiger Teppichaufbau, umfassen:
eine Oberschicht, die im Wesentlichen aus Polyethylenterephthalat-Garn (PET-Garn) besteht, das aus PET-Fasern zusammengesetzt ist, wobei das PET-Garn einen Durchmesser zwischen 133 und 267 Tex (1200 und 2400 Denier) hat und aus PET-Fasern gebildet ist und mit einer vorgegebenen Feinheit getuftet ist, wobei die Oberschicht ein Florgewicht hat,
eine an die Oberschicht angrenzende erste Teppichgrundischicht und
eine an die erste Teppichgrundschicht angrenzende erste Rückenbeschichtung.

2. Zusammengesetzter Teppich nach Anspruch 1, dadurch gekenntzeichnet, das Florgewicht der Oberschicht im Bereich von 305,2 g/m² bis 1695,3 g/m² (9,0 oz/sq.yd bis 50,0 oz/sq.yd) liegt.

3. Zusammengesetzter Teppich nach Anspruch 1, **dadurch gekennzeichnet**, das Florgewicht der Oberschicht größer als 1695,3 g/m² (50,0 oz/sq.yd) ist.

4. Zusammengesetzter Teppich nach Anspruch 1, **dadurch gekennzeichnet, dass** das PET-Garn der Oberschicht ein Schlaufengarn oder ein gezwirntes Garn ist.

5. Zusammengesetzter Teppich nach Anspruch 1, **dadurch gekennzeichnet, dass** die erste Teppichgrundschicht aus einer Polyesterfaser und/oder einer Polymerfaser zusammengesetzt ist.

## Revendications

1. Ensemble de tapis léger, comprenant:
une couche de face constituée essentiellement de fil en polyéthylène téréphtalate (PET) composé de fibres de PET, ledit fil de PET ayant un diamètre compris entre 133 et 267 tex (1 200 et 2 400 deniers) et étant composé de fibres de PET et touffeté à une jauge prédéterminée, ladite couche de face ayant un poids de face ;
une première couche de support adjacente à ladite couche de face ; et
une première couche de revêtement dorsale adjacente à ladite première couche de support.

2. Ensemble de tapis selon la revendication 1, dans lequel ledit poids de face de ladite couche de face est compris entre 305,2 g par mètre carré et 1 695,3 g par mètre carré (9,0 onces par yard carré et 50,0 onces par yard carré).

3. Ensemble de tapis selon la revendication 1, dans lequel ledit poids de face de ladite couche de face est supérieur à 1 695,3 g par mètre carré (50,0 onces par yard carré).

4. Ensemble de tapis selon la revendication 1, dans lequel ledit fil de PET de ladite couche de face est un fil parmi le fil bouclé et le fil retors.

5. Ensemble de tapis selon la revendication 1, dans lequel ladite première couche de support est composée d'au moins une fibre parmi la fibre de polyester et la fibre polymère.
